## Europäisches Patentamt
## European Patent Office
## Office européen des brevets

(19)

(11) Numéro de publication: **0 151 360
B1**

(12)

# FASCICULE DE BREVET EUROPÉEN

(45) Date de publication du fascicule du brevet:
02.08.89

(51) Int. Cl.⁴: **C 08 F 265/06**, C 08 F 265/04, C 09 D 3/00

(21) Numéro de dépôt: 84402650.0

(22) Date de dépôt: 19.12.84

(54) Dispersion aqueuse de polymère de stabilité améliorée et son procédé de fabrication.

(30) Priorité: 30.12.83 FR 8321057

(43) Date de publication de la demande:
14.08.85 Bulletin 85/33

(45) Mention de la délivrance du brevet:
02.08.89 Bulletin 89/31

(84) Etats contractants désignés:
AT BE CH DE FR GB IT LI LU NL SE

(56) Documents cité:
US-A-3 454 516
US-A-3 457 209
US-A-3 729 439
US-A-4 151 143
US-A-4 351 875
US-A-4 385 152

(73) Titulaire: NORSOLOR S.A., Tour Aurore Place des Reflets, F-92080 Paris la Défense Cédex 5 (FR)

(72) Inventeur: Guillot, Jean, Les Ifs, F-69620 Le Bois d'Oingt (FR)
Inventeur: Pichot, C., 5 Allée Roland Garros, F-69960 Corbas (FR)
Inventeur: Emelie, Brigitte, Rue Leperck, F-60550 Verneuil- en- Halatte (FR)
Inventeur: Cretenot, Claude- Lise, 1, rue de la Pinède, F-60550 Verneuil- en- Halatte (FR)
Inventeur: Vigouroux, Alain, 24, Allée du Valois, F-60500 Chantilly (FR)

(74) Mandataire: Dubost, Thierry, c/o NORSOLOR Service Propriété Industrielle B.P. 57, F-62670 Mazingarbe (FR)

## Description

La présente invention se rapporte à une dispersion aqueuse de polymère de stabilité améliorée, son procédé de fabrication et son application à la formulation de peintures ayant une bonne tension.

Différents latex de polymère à plastification interne, obtenus par polymérisation de monomères acryliques en émulsion dans l'eau, sont deja connus notamment par les brevets français n° 2 383 971 et 2 391 245, par les brevets américains n° 2 795 564, 3 256 233, 3 668 274 et 3 796 771 et par le brevet européen n° 45 357.

On connaît également par le brevet américain n° 3 457 209 un latex comprenant un copolymère de 50 à 95 % en poids d'un (méth)acrylate d'alkyle, 0,5 à 15 % en poids de N-méthylol(méth)acrylamide et jusqu'au 49 % en poids d'autres comonomères vinylidéniques (tels que diènes conjugués, oléfines, esters vinyliques, styrène, (méth)acrylamide, acide (méth)acrylique), ledit copolymère étant surpolymérisé (greffé) par 0,1 à 10 % en poids d'acide (méth)acrylique ou itaconique, le cas échéant en présence d'un monomère vinylidénique. En ajustant le pH de ce latex par addition d'alcali, on obtient un système de très haute viscosité (par exemple 750 à 15 000 poises pour un latex contenant environ 50 % de matières solides à pH 9 - 9,5) sans avoir besoin d'ajouter un agent épaississant.

On connaît enfin par le brevet américain n° 4 351 875 un latex acrylique dont les particules comprennent:

- de 30 à 60 % en poids d'un noyau formé par copolymérisation en émulsion de 70 à 95 % en poids d'un acrylate d'alkyle ($C_1$ - $C_8$), 4 à 10 % en poids de (méth)acrylamide et le cas échéant d'autres monomères (méthacrylates, acide itaconique).
- de 40 à 70 % en poids d'une enveloppe formée, en présence du noyau, par copolymérisation en émulsion de 40 à 70 % en poids d'acrylate d'alkyle ($C_1$ - $C_8$), 20 à 50 % en poids de méthacrylate d'alkyle ($C_1$ - $C_8$), 2 à 10 % en poids de N-méthylol (méth)acrylamide et le cas échéant d'acide itaconique.

Les monomères formant le noyau sont choisis de manière à conférer à celui-ci une température de transition vitreuse inférieure ou égale à -20° C; ceux formant l'enveloppe sont choisi de manière de conférer à celle-ci une température de transition vitreuse comprise entre -10° C et +60° C.

Parce que l'acide carboxylique insaturé n'est pas suffisamment localisé à la surface des particules, aucun des polymères proposés par ces documents antérieurs ne s'est révélé satisfaisant pour l'amélioration des performances d'application, en particulier de tension, des formulations de peintures. Pour résoudre ce problème, la demanderesse s'est proposée de modifier le rôle et la constitution de l'enveloppe dans la structure composite des particules de polymère tout en maintenant et, si possible, en améliorant la stabilité au stockage de la dispersion. Plus précisément la demanderesse s'est proposée de mettre au point une structure composite de particules qui se distinguerait des structures connues par une moindre importance de l'enveloppe par rapport au noyau et par une répartition plus importante des monomères hydrophiles dans ladite enveloppe.

Pour résoudre les problèmes évoqués ci-dessus, la présente invention consiste en une dispersion aqueuse de particules de polymère, constitué d'au moins un interpolymère de (A) 95 à 99 % en poids d'au moins un monomère choisi parmi les méthacrylates d'alkyle dont le groupe alkyle a de 1 à 8 atomes de carbone et les acrylates d'alkyle dont le groupe alkyle a de 1 à 8 atomes de carbone, et (B) de 1 à 5 % en poids d'au moins un monomère hydrosoluble copolymérisable avec le(s) monomère(s) (A), lesdites particules ayant une structure composite comprenant un noyau et une enveloppe, dispersion caractérisée en ce que l'enveloppe contient de 50 à 90 % en moles de(s) monomères(s) hydrosoluble(s) de la dispersion et en que ladite dispersion est suspectible d'être obtenue par un procédé comprenant une première étape de (A) et une seconde étape consistant à introduire dans le réacteur, lorsque le taux d'avancement de la réaction de polymerisation à atteint une valeur au moins egale à 82 % un mélange comprenant de 12 à 45 % en poids d'au moins un monomère hydrosoluble (B) et de 55 à 88 % en poids de monomères (A). La proportion de l'enveloppe par rapport à la particule, qui peut être évaluée par des dosages potentiométriques, conductimétriques et des mesures viscosimétriques, est généralement comprise entre 0,5 et 5 % en poids. La température de transition vitreuse du noyau des particules est généralement comprise entre +5 et +40° C.

Par monomère hydrosoluble copolymérisable avec le(s) monomère(s) (A) on entend notamment, au sens de la présente invention, un monomère choisi parmi les acides acryliques, méthacrylique, itaconique et maléique, les acrylates et méthacrylates d'aminoalkyle dont le groupe alkyle a de 2 à 8 atomes de carbone ainsi que leurs sels d'ammonium quaternaire, les acrylates et méthacrylates d'hydroxyalkyle dont le groupe alkyle a de 2 à 8 atomes de carbone, les esters acryliques et méthacryliques sulfonés, la (méth)acrylamide et ses dérivés substitués, la vinylpyrolidone, la vinylimidazole, les vinylpyridines, les acrylates et méthacrylates d'imidazolidone et leurs dérivés substitués.

Il est important de noter que, contrairement aux structures composites décrites par l'art antérieur, la structure composite selon l'invention n'est pas une structure de polymère à plastification interne mais une structure dans laquelle l'état de surface de la particule est modifié en vue d'améliorer certaines propriétés de la dispersion aqueuse.

L'interpolymère faisant partie de la dispersion aqueuse selon l'invention peut n'être constitué que des monomères de type (A) et (B) cités ci-dessus. Il peut aussi comprendre en outre, pour 100 parties en poids des monomères (A) et (B), jusqu'à 3 parties d'au moins un monomère réticulant choisi parmi les N-hydroxyalcoylamides des acides acrylique et méthacrylique, l'acrylamide, la méthacrylamide, le divinylbenzène et les

2

oligoacrylates et oligométhacrylates de polyols tels que notamment le triéthylèneglycol di(méth)acrylate, l'éthylèneglycol diméthacrylate, le tétraéthylèneglycol di(méth)acrylate, le polyéthylèneglycol 200 di(méth)acrylate, le 1,6-hexanediol di(méth)acrylate, le néopentylglycol di(méth)acrylate, le 1,3-butylèneglycol di(méth)acrylate, le diéthylèneglycol di(méth)acrylate, le triméthylolpropane tri(méth)acrylate, le di(méth)acrylate de bisphénol A éthoxylé, le tétraacrylate de pentaerythritol, le tripropylèneglycol diacrylate, le dipentaerythritol hydroxypentaacrylate, le triacrylate de trihydroxyéthylisocyanurate et le triacrylate de triméthylolpropane éthoxylé.

Pour l'amélioration de la stabilité au stockage de la dispersion aqueuse selon l'invention et pour l'application de celle-ci à la formulation de peintures ayant une bonne tension, il peut être particulièrement avantageux que de 10 à 40 % en poids de(s) monomère(s) hydrosoluble(s) de la dispersion soient contenus dans la phase aqueuse.

Les dispersions aqueuses selon l'invention présentent généralement une teneur en matières solides comprise entre 20 et 65 % en poids. La taille moyenne des particules de polymère présentes dans les dispersions aqueuses selon l'invention est généralement comprise entre 0,05 µm et 1 µm. Contrairement à ce qui était connu jusqu'à présent dans le cas des dispersions dites monodisperses, c'est-à-dire dont l'indice de polydispersité de la taille des particules est très voisin de 1, les dispersions aqueuses selon l'invention présentent l'avantage de demeurer stables au stockage même lorsque la taille moyenne des particules de polymère dépasse 0,35 µm.

Un second objet de la présente invention concerne un procédé de fabrication d'une dispersion aqueuse telle que décrite précédemment, comprenant une première étape de polymérisation en émulsion dans l'eau de(s) monomère(s) (A), caractérisé en ce qu'il comprend en outre une seconde étape consistant à introduire dans le réacteur, lorsque le taux d'avancement de la réaction de polymérisation a atteint une valeur au moins égale à 82 %, un mélange comprenant de 12 à 45 % en poids d'au moins un monomère hydrosoluble (B) et de 55 à 88 % en poids de monomères (A). L'étape de polymérisation est généralement effectuée à une température comprise entre 45°C et 75°C en présence d'au moins un initiateur du type générateur de radicaux libres.

L'initiateur de polymérisation peut être notamment choisi parmi les persulfates, les peroxydes, les hydroperoxydes et les composés diazoïques; lorsqu'un persulfate de métal alcalin est choisi, il peut être utilisé en combinaison avec un réducteur choisi parmi les polyhydroxyphénols, le sulfite et le bisulfite de sodium, le diméthylaminopropionitrile, les diazomercaptans et les ferricyanures. L'initiateur et, le cas échéant, le réducteur sont utilisables à raison de 0,1 à 2 % chacun en poids par rapport à l'ensemble des monomères présents.

Comme il est connu, la première etape du procédé selon l'invention peut se dérouler en présence d'au moins un agent dispersant anionique, cationique ou non ionique, dont on utilise habituellement de 0,5 à 10 % en poids par rapport à l'ensemble des monomères présents. Comme exemples d'agents dispersants utilisables lors de la mise en oeuvre d'un procédé de polymérisation selon la présente invention, on peut notamment citer des sels de métal alcalin et d'ammonium d'alcoyl-, aryl-, alcaryl- et aralcoyl-sulfonates et -sulfates, ou de polyéther-sulfates; les phosphates et phosphonates correspondants et des acides gras, esters, alcools, amines, amides et alcoylphénols éthoxylés.

Lorsque l'interpolymère faisant partie de la dispersion aqueuse selon l'invention contient au moins un monomère réticulant, celui-ci est avantageusement introduit dans le réaction pendant la première étape du procédé selon l'invention.

Contrairement aux latex décrits par le brevet américain n° 3 457 209, les dispersions selon l'invention ne sont pas capables d'atteindre de très hautes viscosités même lorsque leur teneur en matières solides est élevée et que leur pH a été augmenté par addition d'alcali.

Les exemples ci-après illustrent de manière non limitative différents modes de réalisation de l'invention.

## Exemples 1 à 4

Dans un réacteur on polymérise en discontinu un mélange de 46,2 parties en poids d'acrylate de n-butyle (en abrégé ABU) et 46,2 parties en poids de méthacrylate de méthyle (en abrégé MAM) en émulsion dans 400 parties en poids d'eau, en présence de 1 partie en poids d'un agent tensioactif anionique constitué par du lauryl sulfate de sodium et de 0,6 partie en poids d'un catalyseur constitué par un mélange équipondéral de métabisulfite de sodium et de persulfate de potassium. La réaction de copolymérisation est poursuivie à la température de 50°C jusqu'à un taux d'avancement de 90 %, puis on introduit dans le réacteur un mélange de 1,5 parties en poids d'un monomère hydrosoluble (en abrégé MHS) et de 6,1 parties en poids de l'un des monomères présents dans la première étape. A l'issue de ces opérations on obtient une dispersion aqueuse de polymère ayant une teneur en matières solides égale à 20 % en poids. Cette dispersion est analysée selon la technique de remplacement de la phase aqueuse, qui consiste en un lavage progressif de la dispersion par de l'eau bidistillée, suivi d'une filtration sur filtre Millipore. L'éluat est constitué par la phase aqueuse de la dispersion (ou sérum), diluée et dans laquelle ont été entraînés les constituants hydrophiles initialement absorbés à la surface des particules, en particulier les tensio-actifs. On dose le taux de groupements carboxyliques portés à la surface de la particule lavée, par conductimétrie. La même technique est employée pour le dosage des fonctions acides dans le sérum. La quantité de groupements carboxyliques contenus à

3

EP 0 151 360 B1

l'intérieur des particules est obtenue par dosage potentiométrique de la solution de polymère en milieu non aqueux tel que la pyridine.

On trouvera dans le tableau I ci-après, outre la nature du monomère hydrosoluble et celle du monomère introduit avec lui dans la seconde étape de préparation de la dispersion, les proportions (exprimées en pourcent en moles) du monomère hydrosoluble localisé dans le sérum, à la surface de la particule et dans la particule. Les abréviations suivantes ont été utilisées:

AA   acide acrylique
AMA  acide méthacrylique

**Tableau I**

| Exemple | MHS | monomère | Localisation MHS | | |
|---|---|---|---|---|---|
| | | | sérum | surface | particule |
| 1 | AA | MAM | 28,0 | 61,3 | 10,7 |
| 2 | AA | ABU | 31,8 | 59,2 | 9,0 |
| 3 | AMA | MAM | 0 | 66 | 34 |
| 4 | AMA | ABU | 4 | 70 | 26 |

**Exemples 5 à 7**

Pour illustrer:

- l'influence de la proportion du monomère hydrosoluble dans le mélange introduit dans la seconde étape du procédé (exemples 5 et 6), et
- l'influence du taux de conversion atteint à la fin de la première étape (exemple 7),

les variations suivantes ont été effectuées autour du mode de réalisation de l'exemple 4. Dans les exemples 5 et 6, la proportion de l'acide méthacrylique dans le mélange introduit dans la seconde étape du procédé a été portée respectivement à 11 % (exemple 5 comparatif) et 40 % (exemple 6) au lieu de 21 % (exemple 4), en sorte que la proportion en poids de l'acide méthacrylique dans l'interpolymère formant les particules de la dispersion passe de 1,5 % (exemple 4) à 0,8 % (exemple 5 comparatif) et 3,7 % (exemple 6). Dans l'exemple 7 comparatif, le taux de conversion atteint à la fin de la première étape est abaissé à 80 % au lieu de 90 % (exemple 4). On trouvera dans le tableau II ci-après les proportions (exprimées en pourcent) d'acide méthacrylique localisé dans le sérum, à la surface de la particule et dans la particule.

**Tableau II**

| exemple | localisation AMA | | |
|---|---|---|---|
| | sérum | surface | particule |
| 5 | 17 | 48 | 35 |
| 6 | 6,0 | 90,5 | 3,5 |
| 7 | 3 | 46 | 51 |

**Exemples 8 à 10**

On reproduit la procédure de synthèse des exemples 2 et 4, à l'exception de la nature et de la proportion de l'agent tensio-actif. Ainsi l'exemple 8 est similaire à l'exemple 2, 1 partie en poids de lauryl sulfate de sodium étant remplacée par 3 parties en poids d'un agent tensio-actif non ionique constitué par du nonylphénol polyoxyéthyléné (25 O. E), ci-après désigné NPPO. Les exemples 9 et 10 sont similaires à l'exemple 4, 1 partie en poids de lauryl sulfate de sodium étant remplacée par:

- exemple 9:3 parties en poids de NPPO.
- exemple 10: le mélange de 0,2 partie en poids de lauryl sulfate de sodium et de 0,8 partie en poids de NPPO.

Les dispersions aqueuses ainsi obtenues ont une teneur en matières solides égale à 20 en poids. Les résultats de leur analyse, selon les techniques décrites précédemment, figures au tableau III ci-dessous:

4

**Tableau III**
localisation MHS

| exemple | sérum | surface | particule |
|---|---|---|---|
| 8 | 19,5 | 63 | 17,5 |
| 9 | 17 | 60 | 23 |
| 10 | 4 | 81 | 15 |

**Exemple 11**

Un latex est préparé par polymérisation en continu dans des conditions similaires à celles de l'exemple 2, aux deux exeptions suivantes près:

- la température de réaction est maintenue à 67°C.
- 1 partie en poids de N-méthylolacrylamide est ajoutée à l'eau et aux monomères en début de réaction.

On obtient une dispersion aqueuse de polymère ayant une teneur en matières solides égale à 50 % en poids. La viscosité de cette dispersion, mesurée à pH2 à l'aide d'un viscosimètre Brookfield RVT à 20 tours/min., est égale à 1,3 poise. Après addition d'alcali jusqu'à pH 9, la viscosité de la solution est égale à 7,6 poises.

**Revendications**

1. Dispersion aqueuse de particules de polymère, constitué d'au moins un interpolymère de (A) 95 à 99 % en poids d'au moins un monomère choisi parmi les méthacrylates d'alkyle dont le groupe alkyle a de 1 à 8 atomes de carbone et les acrylates d'alkyle dont le groupe alkyle a de 1 à 8 atomes de carbone, et (B) de 1 à 5 % en poids d'au moins un monomère hydrosoluble copolymérisable avec le(s) monomère(s) (A), lesdites particules ayant une structure composite comprenant un noyau et une enveloppe, dispersion caractérisée en ce que l'enveloppe contient de 50 à 90 % en moles de(s) monomères(s) hydrosoluble(s) de la dispersion et en que ladite dispersion est suspectible d'être obtenue par un procédé comprenant une première etape de polymerisation en emulsion dans l'eau de(s) monomère(s) (A) et une seconde étape consistant à introduire dans le réacteur, lorsque le taux d'avancement de la réaction de polymerisation à atteint une valeur au moins egale à 82 %, un mélange comprenant de 12 à 45 % en poids d'au moins un monomère hydrosoluble (B) et de 55 à 88 % en poids de momomères (A).

2. Dispersion selon la revendication 1, caractérisée en ce que 10 à 40 % en poids de(s) monomère(s) hydrosoluble(s) de la dispersion sont contenus dans la phase aqueuse.

3. Dispersion selon l'une des revendications 1 et 2, caractérisée en ce que le monomère hydrosoluble est choisi parmi les acides acrylique, méthacrylique, itaconique et maléique, les acrylates et méthacrylates d'aminoalkyle dont le groupe alkyle a de 2 à 8 atomes de carbone ainsi que leurs sels d'ammonium quaternaire, la vinylpyrolidone, la vinylimidazole, les vinylpyridines, les acrylates et méthacrylates d'imidazolidone et leurs dérivés substitués, les esters acryliques et méthacryliques sulfonés, la (méth)acrylamide et ses dérivés substitués, les acrylates et méthacrylates d'hydroxyalkyle dont le groupe alkyle a de 2 à 8 atomes de carbone.

4. Dispersion selon l'une des revendications 1 à 3, caractérisée en ce que l'interpolymère comprend en outre, pour 100 parties en poids des monomères (A) et (B), jusqu'à 3 parties d'au moins un monomère réticulant choisi parmi les N-hydroxyalcoylamides des acides acrylique et méthacrylique, les oligoacrylates et oligométhacrylates de polyols, l'acrylamide, la méthacrylamide et le divinylbenzène.

5. Dispersion selon l'une des revendications 1 à 4, caractérisée en ce que sa teneur en matières solides est comprise entre 20 et 65 % en poids.

6. Dispersion selon l'une des revendications 1 à 5, caractérisée en ce que la taille moyenne des particules de polymère présentes dans ladite dispersion est comprise entre 0,05 µm et 1 µm.

**Patentansprüche**

1. Wässrige Dispersion von Polymerteilchen bestehend aus mindestens einem Interpolymer aus (A) 95 bis 99 Gew.-% mindestens eines Monomers, das ausgewählt ist aus den Alkylmethacrylaten, deren Alkylgruppe 1 bis 8 Kohlenstoffatome enthält, und den Alkylacrylaten, deren Alkylgruppe 1 bis 8 Kohlenstoffatome enthält, und (B) 1 bis 5 Gew.-% mindestens eines mit dem (den) Monomer(en) (A) copolymerisierbaren wasserlöslichen Monomers, wobei die Teilchen eine Verbundstruktur aus einem Kern und einer Hülle besitzen, dadurch gekennzeichnet, daß die Hülle 50 bis 90 Mol.-% des(der) wasserlöslichen Monomers (Monomere) der Dispersion enthält und daß die genannte Dispersion mittels eines Verfahrens erhalten werden kann, das eine erste Stufe in Form einer Emulsionspolymerisation des (der) Monomers (Monomere) (A) in Wasser und eine zweite Stufe enthält, die darin besteht, in den Reaktor eine Mischung aus 12 bis 45 Gew.-% mindestens eines wasserlöslichen Monomers (B) und 55 bis 88 Gew.-% der Monomere (A) einzubringen, wenn der Reaktionsfortschritt einen Wert von mindestens 82 % erreicht hat.

2. Dispersion nach Anspruch 1, dadurch gekennzeichnet, daß 10 bis 40 Gew.-% des (der) wasserlöslichen Monomers (Monomere) der Dispersion in der wässrigen Phase enthalten sind.

3. Dispersion nach Anspruch 1 oder 2, dadurch gekennzeichnet, daß das wasserlösliche Monomer ausgewählt ist aus der Gruppe bestehend aus Acrylsäure, Methacrylsäure, Itakonsäure, Maleinsäure, den Aminoalkylacrylaten und -methacrylaten, deren Alkylgruppe 2 bis 8 Kohlenstoffatome besitzt, sowie deren quaternäre Ammoniumsalze, Vinylpyrolidon, Vinylimidazol, den Vinylpyridinen, den Imidazolidonacrylaten und -methacrylaten und ihren substituierten Derivaten, den sulfonierten Acryl- und Methacrylestern, (Meth)Acrylamid und seinen substituierten Derivaten, und den Hydroxyalkylacrylaten und -methacrylaten, deren Alkylgruppe 2 bis 8 Kohlenstoffatome besitzt.

4. Dispersion nach einem der Ansprüche 1 bis 3, dadurch gekennzeichnet, daß das Interpolymer weiters auf 100 Gewichtsteile der Monomere (A) und (B) bis zu 3 Teilen mindestens eines Vernetzungsmonomers enthält, das ausgewählt ist aus der Gruppe bestehend aus den N-Hydroxyalcoylamiden der Acryl - und Methacrylsäure, den Oligoacrylaten und Oligomethacrylaten von Polyolen, Acrylamid, Methacrylamid und Divinylbenzol.

5. Dispersion nach einem der Ansprüche 1 bis 4, dadurch gekennzeichnet, daß ihr Feststoffgehalt zwischen 20 und 65 Gew.-% beträgt.

6. Dispersion nach einem der Ansprüche 1 bis 5, dadurch gekennzeichnet, daß die durchschnittliche Größe der in der genannten Dispersion vorhandenen Polymerteilchen zwischen 0,05 µm und 1 µm liegt.

## Claims

1. Aqueous dispersion of polymer particles consisting of of at least one interpolymer of (A) 95 to 99 % by weight of at least one monomer chosen from alkyl methacrylates the alkyl group of which contains from 1 to 8 carbon atoms and alkyl acrylates the all group of which contains from 1 to 8 carbon atoms, and (B) from 1 to 5 % by weight of at least one water-soluble monomer copolymerizable with the monomer(s) (A), the said particles having a composite structure comprising a core and a coating, a dispersion characterized in that the coating contains from 50 to 90 % mole of the water-soluble monomer(s) of the dispersion and in that the said dispersion may be obtained by a process comprising a first step of polymerisation of the monomer(s) (A) in emulsion in water and a second step consisting in introducing a mixture comprising from 12 to 45 % by weight of at least one water-soluble monomer (B) and from 55 to 88 % by weight of monomers (A) into the reactor when the degree of conversion of the polymerization reaction has reached a value of at least 82 %.

2. Dispersion according to Claim 1, characterized in that 10 to 40 % by weight of the water-soluble monomer(s) of the dispersion are present in the aqueous phase.

3. Dispersion according to either of Claims 1 and 2, characterized in that the water-soluble monomer is chosen from acrylic, methacrylic, itaconic and maleic acids, aminoalkyl acrylates and methacrylates the all group of which contains from 2 to 8 carbon atoms, and their quaternary ammonium salts, vinylpyrrolidone, vinylimidazole, vinylpyridines, imidazolidone acrylates and methacrylates and their substituted derivatives, sulphonated acrylic and methacrylic esters, (meth)acrylamide and its substituted derivatives, and hydroxyalkyl acrylates and methacrylates the alkyl group of which contains from 2 to 8 carbon atoms.

4. Dispersion according to one of Claims 1 to 3, characterized in that the copolymer additionally comprises, per 100 parts by weight of the monomers (A) and (B), up to 3 parts of at least one crosslinking monomer chosen from N-hydroxyalkylacrylamides and methacrylamides, polyol oligoacrylates and oligomethacrylates, acrylamide, methacrylamide and divinylbenzene.

5. Dispersion according to one of Claims 1 to 4, characterized in that its solids content is between 20 and 65 % by weight.

6. Dispersion according to one of Claims 1 to 5, characterized in that the average size of the polymer particles present in the said dispersion is between 0.05 µm and 1 µm.